# EUROPÄISCHE PATENTANMELDUNG

(11) **EP 3 607 817 A1**
(43) Veröffentlichungstag der Anmeldung: **12.02.2020**
(21) Anmeldenummer: 18207578.8
(22) Anmeldetag: 21.11.2018
(51) Int. Cl.: A01G 9/16

(54) **MOBILE AUFZUCHTANLAGE FÜR PFLANZEN**

(30) Priorität: 08.08.2018 DE 202018104565 U
(71) Anmelder: Ritter, Matthias, 96164 Kemmern (DE)
(72) Erfinder: Ritter, Matthias, 96164 Kemmern (DE)
(74) Vertreter: Zimmermann & Partner Patentanwälte mbB

(57) **Zusammenfassung**

Die Erfindung betrifft eine mobile Aufzuchtanlage für Pflanzen, aufweisend einen auf Rädern gelagerten Behälter, welcher mehrere übereinander angeordnete Kammern und/oder mehrere nebeneinander angeordnete Kammern aufweist, wobei jede Kammer mehrere Seitenwände aufweist, wobei der Behälter ein aus Metall- oder Leichtmetallprofilen zusammengesetztes Gehäuse aufweist, innerhalb dessen die Kammern angeordnet sind, und wobei nach außen gerichtete Seitenwände der Kammern jeweils von einer oder mehreren abnehmbaren Seitenplatten gebildet sind.

## Beschreibung

Die Erfindung betrifft eine mobile Aufzuchtanlage für Pflanzen.

Aus der DE 20 2017 101 301 U1 ist bereits ein mobiles Gewächshaus bekannt, welches Räder, eine Pflanzwanne, eine Temperierungswanne, Wandelemente, Dachelemente, Verschattungseinrichtungen, einen Solarkollektor, einen Wärmespeicher, Rohrleitungen, eine Umwälzpumpe, ein Solarstrommodul, einen Elektroenergiespeicher, eine Wassersprühdüse, eine Belüftungseinrichtung, eine Beleuchtungseinrichtung und eine Steuereinheit aufweist. Dieses Gewächshaus soll unter Nutzung von Solarenergie die erforderlichen Klimabedingungen im Gewächshaus einschließlich des Bodensubstrates automatisch regulieren und so optimale Wachstumsbedingungen für die Pflanzen gewährleisten.

Aus der DE 20 2017 107 795 U1 ist ein Zimmergewächshaus bekannt, das einen zylinderförmigen Körper aufweist, der einen Boden, einen Deckel und einen sich vom Boden zu dem Deckel erstreckenden Mantel aufweist, der einen Aufzuchtraum zum Aufnehmen mindestens einer Pflanze umgibt und der eine Öffnung aufweist, durch die die Pflanze in dem Aufzuchtraum anordenbar oder aus dem Aufzuchtraum entnehmbar ist.

Aus der DE 20 2016 102 741 U1 ist ein mobiles Gewächshaus mit einem Rahmenwerk bekannt. In wenigstens einer der mit dem Rahmenwerk ausgebildeten Rahmenöffnungen ist eine transparente Eigenschaften aufweisende Rolltür angeordnet. Des Weiteren weist das Rahmenwerk eine die Rolltür aufnehmende Schienenführung auf.

Die Aufgabe der Erfindung besteht darin, eine insbesondere für Hobbygärtner geeignete flexible und leicht bedienbare mobile Aufzuchtanlage für Pflanzen anzugeben.

Diese Aufgabe wird durch eine mobile Aufzuchtanlage mit den im Anspruch 1 angegebenen Merkmalen gelöst. Vorteilhafte Ausgestaltungen und Weiterbildungen der Erfindung sind in den abhängigen Ansprüchen angegeben.

Eine mobile Aufzuchtanlage für Pflanzen weist gemäß der vorliegenden Erfindung einen auf Rädern gelagerten Behälter auf, welcher mehrere übereinander angeordnete Kammern und/oder mehrere nebeneinander angeordnete Kammern aufweist, wobei jede Kammer mehrere Seitenwände aufweist, wobei der Behälter ein aus Metall-oder Leichtmetallprofilen zusammengesetztes Gehäuse aufweist, innerhalb dessen die Kammern angeordnet sind und wobei nach außen gerichtete Seitenwände der Kammern jeweils von einer oder mehreren abnehmbaren Seitenplatten gebildet sind.

Der Vorteil einer derartigen mobilen Aufzuchtanlage besteht darin, dass durch die Möglichkeit, die nach außen gerichteten Seitenplatten der Kammern abnehmen zu können, jede Kammer bei Bedarf schnell und einfach geöffnet werden kann, um in der jeweiligen Kammer notwendige Bedien- bzw. Pflegemaßnahmen vornehmen zu können. Beispielsweise kann nach einer Abnahme einer Seitenplatte einer Kammer eine Pflege einer oder mehrerer in der Kammer befindlichen Pflanzen, ein Einsetzen einer Pflanze in die jeweilige Kammer, ein Entfernen einer Pflanze aus der jeweiligen Kammer, ein Austausch eines in der Kammer befindlichen Behälters zwecks dessen Reinigung, ein Austausch einer defekten Beleuchtung der jeweiligen Kammer, usw., vorgenommen werden. Nach Beendigung der jeweiligen Arbeit kann die Kammer schnell und einfach durch ein Wiederbefestigen der Seitenplatte wieder geschlossen werden.

Gemäß einer Ausführungsform der Erfindung sind die nicht nach außen gerichteten Seitenwände der Kammern jeweils von einer oder mehreren herausziehbaren Seitenplatten gebildet. Dies hat den Vorteil, dass bei Bedarf eine der Kammern der Aufzuchtanlage durch ein Entfernen einer nicht nach außen gerichteten Seitenplatte schnell und einfach vergrößert werden kann. Dadurch ist die Größe der Kammern flexibel und kann den Wünschen eines Benutzers entsprechend schnell und einfach verändert werden.

Vorzugsweise bestehen die Seitenplatten aus Leichtmetall, Kunststoff, Plexiglas oder Glas. Aufgrund der Möglichkeit, die Seitenplatten einer Kammer schnell und einfach abnehmen zu können, besteht auch die Möglichkeit, beispielsweise eine Kunststoffplatte schnell und einfach durch eine Plexiglasplatte oder eine Glasplatte zu ersetzen, wenn dies vom Benutzer gewünscht ist.

Eine vorteilhafte Ausführungsform besteht darin, die abnehmbaren Seitenplatten jeweils mit dem Gehäuse der Aufzuchtanlage mittels Klettverbindungen zu verbinden. Dies ermöglicht ein schnelles Abnehmen einer Seitenplatte vom Gehäuse und auch ein schnelles Wiederbefestigen der Seitenplatte am Gehäuse, ohne dass hierzu Werkzeug benötigt wird.

Gemäß einer Ausführungsform weist die Aufzuchtanlage eine oder mehrere Kammern auf, die jeweils eine oder mehrere nicht transparente Seitenplatten aufweisen. Gemäß einer Ausführungsform weist die Aufzuchtanlage eine oder mehrere Kammern auf, die jeweils eine oder mehrere transparente Seitenplatten aufweisen.

Durch die Abnehmbarkeit der Seitenplatten besteht die Möglichkeit, bei Bedarf schnell und einfach eine transparente Seitenplatte durch eine nicht transparente Seitenplatte zu ersetzen oder umgekehrt, sofern dies vom Benutzer gewünscht ist.

Vorzugsweise weist die mobile Aufzuchtanlage eine Steuereinheit auf, die zur Steuerung einer individuellen Beleuchtung und/oder individuellen Beheizung und/oder individuellen Belüftung und/oder individuellen Entlüftung der Kammern ausgebildet ist. Dies ermöglicht es, den Innenraum einer Kammer an die jeweiligen Bedürfnisse der in der jeweiligen Kammer befindlichen Pflanze anzupassen. Zu diesem Zweck kann die Steuereinheit in einem Speicher hinterlegte Betriebssoftware verwenden, die einer Pflanzenaufzuchtsoftware entspricht.

Gemäß einer Ausführungsform ist die Steuereinheit mit einer Fernsteuereinheit koppelbar, welche zur Eingabe von die Steuerung der Aufzuchtanlage betreffenden Bedienbefehlen ausgebildet ist. Dies erleichtert die Bedienbarkeit der Aufzuchtanlage, da ein Benutzer eine Bedienung der Aufzuchtanlage nicht zwingend an der Aufzuchtanlage selbst vornehmen muss, sondern diese Bedienung auch von einem von der Aufzuchtanlage entfernten Ort vornehmen kann. Bei dieser Fernsteuereinheit kann es sich um ein Handy oder ein Laptop handeln, das mit einer entsprechenden Applikationssoftware ausgestattet ist.

Gemäß einer Ausführungsform ist die Aufzuchtanlage durch einen Anbau weiterer mobiler Aufzuchtanlagen oder weiterer Metall- oder Leichtmetallprofile oder weiterer Module erweiterbar. Unter einem Modul wird dabei entweder eine einzelne Kammer oder eine Gruppe von einander benachbarten Kammern verstanden. Auch diese Erweiterbarkeit wird durch die Abnehmbarkeit der Seitenplatten und vorzugsweise auch der Zulufteinheiten der Kammern begünstigt.

Gemäß einer Ausführungsform ist die Aufzuchtanlage mittels Solarstrom betreibbar. Dieses Betreiben der Aufzuchtanlage mit Solarstrom erfolgt vorzugsweise dann, wenn ausreichend Solarstrom zur Verfügung steht. Ist dies nicht der Fall, dann wird vorzugsweise automatisch auf eine Stromversorgung der Aufzuchtanlage aus dem Wechselstromnetz umgeschaltet.

Gemäß einer Ausführungsform sind innerhalb der Aufzuchtanlage eine oder mehrere Steckerleisten angeordnet, die zum Anschluss interner Verbraucher der Aufzuchtanlage vorgesehen sind, beispielsweise einer oder mehrerer Pumpen oder eines oder mehrerer Leuchtmittel, etc.

Weitere Vorteile der Erfindung ergeben sich aus deren Erläuterung anhand der Figuren. Es zeigt
Figur 1 eine Skizze zur Veranschaulichung des auf Rädern gelagerten Gehäuses der Aufzuchtanlage,
Figur 2 eine Skizze einer Draufsicht auf eine Kammer,
Figur 3 eine Skizze zur Veranschaulichung der Befestigung einer Seitenplatte an einem Leichtmetallprofil des Gehäuses,
Figur 4 eine Skizze zur Veranschaulichung der Nutzung der verschiedenen Kammern der Aufzuchtanlage,
Figur 5 eine Skizze zur besseren Veranschaulichung der Stromversorgung der Aufzuchtanlage unter Verwendung von Steckerleisten,
Figur 6 eine Blockdarstellung zur Veranschaulichung der Arbeitsweise der Steuereinheit der Aufzuchtanlage,
Figur 7 eine Skizze zur besseren Veranschaulichung der Stromversorgung der Aufzuchtanlage unter Verwendung der Steuereinheit,
Figur 8 eine Skizze zur Erläuterung eines Ausführungsbeispiels für eine Zulufteinheit,
Figur 9 eine Skizze zur Erläuterung eines Ausführungsbeispiels für eine Bewässerungseinheit,
Figur 10 eine Skizze zur Veranschaulichung eines Ausführungsbeispiels für einen Steckverbindungsinnenwinkels,
Figur 11 eine Skizze zur Veranschaulichung eines Ausführungsbeispiels für einen Schraubverbindungsnutwinkel,
Figur 12 eine Skizze zur Veranschaulichung eines Ausführungsbeispiels für ein Leichtmetallprofil,
Figur 13 eine vereinfachte perspektivische Skizze einer Ausführungsform für eine mobile Aufzuchtanlage,
Figur 14 eine vereinfachte perspektivische Skizze einer weiteren Ausführungsform für eine mobile Aufzuchtanlage,
Figur 15 eine vereinfachte perspektivische Skizze einer weiteren Ausführungsform für eine mobile Aufzuchtanlage,
Figur 16 eine vereinfachte perspektivische Skizze einer weiteren Ausführungsform für eine mobile Aufzuchtanlage,
Figur 17 eine Skizze zur Veranschaulichung einer möglichen Ausgestaltung der in der Figur 4 gezeigten Stecklingswanne und
Figur 18 Skizzen eines Erntehelfers.

Eine erfindungsgemäße mobile Aufzuchtanlage für Pflanzen weist einen auf Rädern gelagerten Behälter auf, welcher mehrere übereinander angeordnete Kammern und/oder mehrere nebeneinander angeordnete Kammern aufweist, wobei jede Kammer mehrere Seitenwände aufweist, wobei der Behälter ein aus Metall- oder Leichtmetallprofilen zusammengesetztes Gehäuse aufweist, innerhalb dessen die Kammern angeordnet sind, und wobei nach außen gerichtete Seitenwände der Kammern jeweils von einer oder mehreren abnehmbaren Seitenplatten gebildet sind.

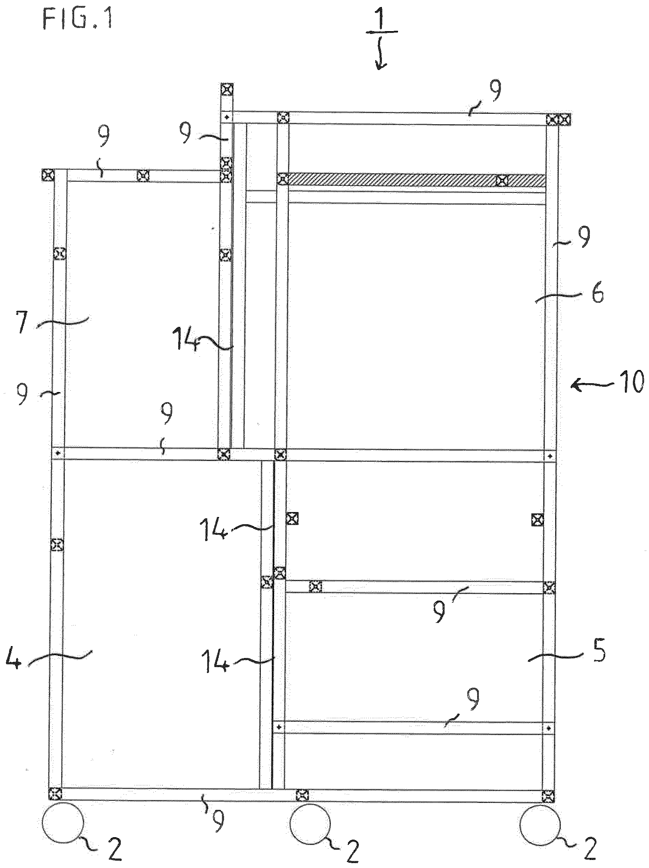

Die Figur 1 zeigt eine Skizze zur Veranschaulichung des auf Rädern 2 gelagerten Gehäuses 10 der mobilen Aufzuchtanlage 1. Dieses Gehäuse 10 besteht aus einer Vielzahl von zusammengesteckten und miteinander verschraubten Metall- oder Leichtmetallprofilen 9. Im Inneren dieses Gehäuses 10 sind Kammern 4, 5, 6 und 7 gebildet, deren Aufbau anhand der weiteren Figuren näher erläutert wird. An den einzelnen Metall-oder Leichtmetallprofilen sind weitere Profile befestigt, die als Auflagefläche für Böden oder diverse Behälter dienen. Nachfolgend wird davon ausgegangen, dass das Gehäuse 10 aus zusammengesteckten und miteinander verschraubten Leichtmetallprofilen besteht.

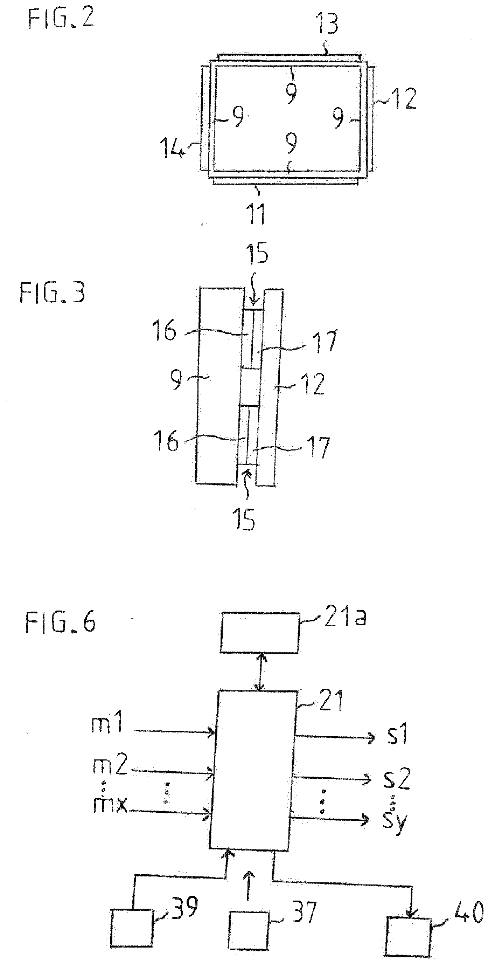

Die Figur 2 zeigt eine Skizze einer Draufsicht auf eine der Kammern. Diese Kammer ist rechteckförmig ausgebildet. Sie kann insbesondere auch quadratisch ausgebildet sein. Sie weist vier Seitenwände auf. Diese Seitenwände sind durch jeweils eine Seitenplatte realisiert. Die Seitenplatten der gezeigten Kammer sind mit den Bezugszahlen 11, 12, 13 und 14 bezeichnet. Beispielsweise handelt es sich bei den Seitenplatten 11, 12 und 13 um nach außen gerichtete Seitenplatten der Kammer und bei der Seitenplatte 14 um eine nach innen gerichtete Seitenplatte der Kammer. Unter einer nach außen gerichtete Seitenplatte der Kammer ist dabei zu verstehen, dass diese Seitenplatte bei einer Betrachtung der gesamten Aufzuchtanlage von außen zu sehen ist und dass diese Seitenplatte von der Außenseite der Aufzuchtanlage aus zugänglich ist. Unter einer nach innen gerichteten Seitenplatte der Kammer ist dabei zu verstehen, dass diese Seitenplatte die Kammer im Inneren der Aufzuchtanlage von einer benachbarten Kammer abgrenzt und keine äußere Seitenwand der Aufzuchtanlage bildet.

Jede der nach außen gerichteten Seitenplatten 11, 12 und 13 der Kammer ist an einem Leichtmetallprofil 9 des Gehäuses 10 derart befestigt, dass sie schnell und einfach ohne Werkzeug von diesem Leichtmetallprofil abgenommen werden kann und auch schnell und einfach ohne Werkzeug wieder an diesem Leichtmetallprofil befestigt werden kann.

Vorzugsweise ist auch die nach innen gerichtete Seitenplatte 14 der Kammer an einem Leichtmetallprofil 9 des Gehäuses 10 derart gelagert, dass sie schnell und einfach ohne Werkzeug aus der Aufzuchtanlage entnommen werden kann und auch schnell und einfach ohne Werkzeug wieder in die Aufzuchtanlage eingesetzt werden kann.

Die Seitenplatten 11, 12, 13 und 14 einer Kammer bestehen jeweils aus Leichtmetall, Kunststoff, Plexiglas oder Glas. Die Seitenplatten einer Kammer können auch aus unterschiedlichen Materialien bestehen. Es ist auch möglich, dass die Seitenplatten unterschiedlicher Kammern aus unterschiedlichen Materialien bestehen.

Die Seitenplatten der Kammern können transparent oder nicht-transparent sein. Es besteht auch die Möglichkeit, eine oder mehrere Kammern ausschließlich mit nichttransparenten Seitenplatten auszustatten und die verbleibenden Kammern mit transparenten Seitenplatten.

Durch die Abnehmbarkeit dieser Seitenplatten vom Gehäuse der Aufzuchtanlage ist sichergestellt, dass bei Bedarf eine transparente Seitenplatte durch eine nicht-transparente Seitenplatte ersetzt werden kann oder umgekehrt.

Wie aus der Figur 1 ersichtlich ist, weist die Aufzuchtanlage übereinander angeordnete Kammern 5 und 6 und auch nebeneinander angeordnete Kammern 4 und 5 auf.

Die Figur 3 zeigt eine Skizze zur Veranschaulichung einer werkzeugfrei lösbaren Befestigung einer Seitenplatte an einem Leichtmetallprofil. Diese Seitenplatte, beispielsweise die Seitenplatte 12, ist an einem zugehörigen Leichtmetallprofil 9 mittels einer oder mehrerer Klettverbindungen 15 befestigt, die jeweils aus einem Flauschband 16 und einem Hakenband 17 bestehen. Bei einer derartigen Verbindung bedarf es keines Werkzeugs, um die Seitenplatte 12 vom Leichtmetallprofil 9 abzunehmen und auch keines Werkzeugs, um diese Seitenplatte 12 wieder am Leichtmetallprofil 9 zu befestigen.

Im Betrieb der Aufzuchtanlage kann die Seitenplatte 12, bei der es sich um eine nach außen gerichtete Seitenplatte handelt, schnell und einfach vom Leichtmetallprofil abgenommen werden, um Arbeiten in der zugehörigen Kammer durchzuführen, und nach Beendigung dieser Arbeiten schnell und einfach wieder auf das Leichtmetallprofil aufgesetzt werden, um die Kammer wieder zu verschließen.

Die nach innen gerichtete Seitenplatte 14 der Kammer ist vorzugsweise zwischen zwei Leichtmetallprofilen angeordnet und ohne Verwendung eines Werkzeugs herausziehbar. Durch ein Herausziehen derartiger nach innen gerichteter Seitenplatten können Kammern bei Bedarf vergrößert werden.

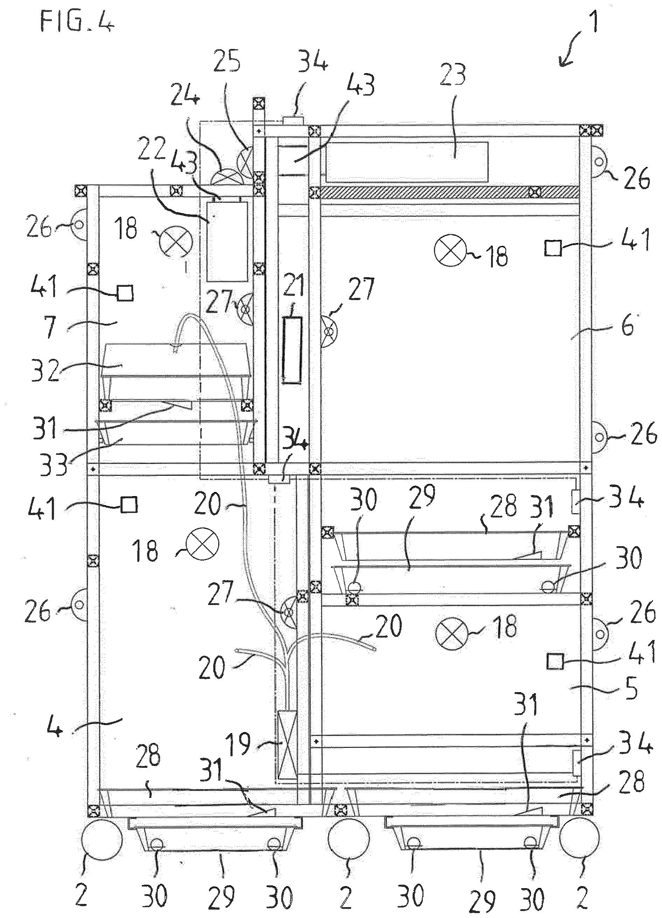

Die Figur 4 zeigt eine Skizze zur Veranschaulichung der Nutzung der verschiedenen Kammern der Aufzuchtanlage. Gemäß diesem Ausführungsbeispiel wird die Kammer 4 als Mutterpflanzenkammer, die Kammer 5 als Jungpflanzenkammer, die Kammer 6 als Blühpflanzenkammer und die Kammer 7 entweder als Stecklingskammer oder als Trocknungskammer verwendet.

Jede dieser Kammern weist ein Leuchtmittel 18 auf, welches während des Betriebes der Aufzuchtanlage von einer Steuereinheit 21 individuell einschaltbar, ausschaltbar und auch dimmbar ist, um innerhalb der jeweiligen Kammer eine gewünschte Helligkeit einzustellen. Die Steuereinheit 21 ist beim gezeigten Ausführungsbeispiel in einer eigenen Kammer angeordnet, die zwischen der Blühpflanzenkammer 6 und der Stecklingskammer 7 angeordnet ist.

Des Weiteren weist die in der Figur 4 gezeigte Aufzuchtanlage einen integrierten Luftbefeuchter 19 auf, von welchem aus Befeuchtungsschläuche 20 in die Mutterpflanzenkammer 4, die Jungpflanzenkammer 5, die Stecklingskammer 7 und auch - was in der Figur 4 nicht dargestellt ist - in die Blühpflanzenkammer 6 führen. Die Befeuchtung der genannten Kammern erfolgt ebenfalls individuell unter Steuerung durch die Steuereinheit 21.

Ferner weist die in der Figur 4 gezeigte Aufzuchtanlage Aktivkohlefilter 22 und 23 auf. Diese Aktivkohlefilter 22 und 23, die jeweils über ein flexibles Abluftrohr 43 mit einem Abluftrohrventilator 24 bzw. 25 verbunden sind, sind dazu vorgesehen, die aus der Aufzuchtanlage nach außen abgeführte Abluft von unangenehmen Gerüchen zu befreien.

Des Weiteren weist die in der Figur 4 gezeigte Aufzuchtanlage 1 mehrere vorzugsweise einzeln werkzeugfrei abnehmbare und werkzeugfrei aufsteckbare Zulufteinheiten 26 auf. Diese dienen zu einer individuellen Belüftung einer jeweils zugehörigen Kammer der Aufzuchtanlage mit Luft aus dem Außenbereich der Aufzuchtanlage. Auch diese individuelle Belüftung der Kammern erfolgt unter Steuerung durch die Steuereinheit 21.

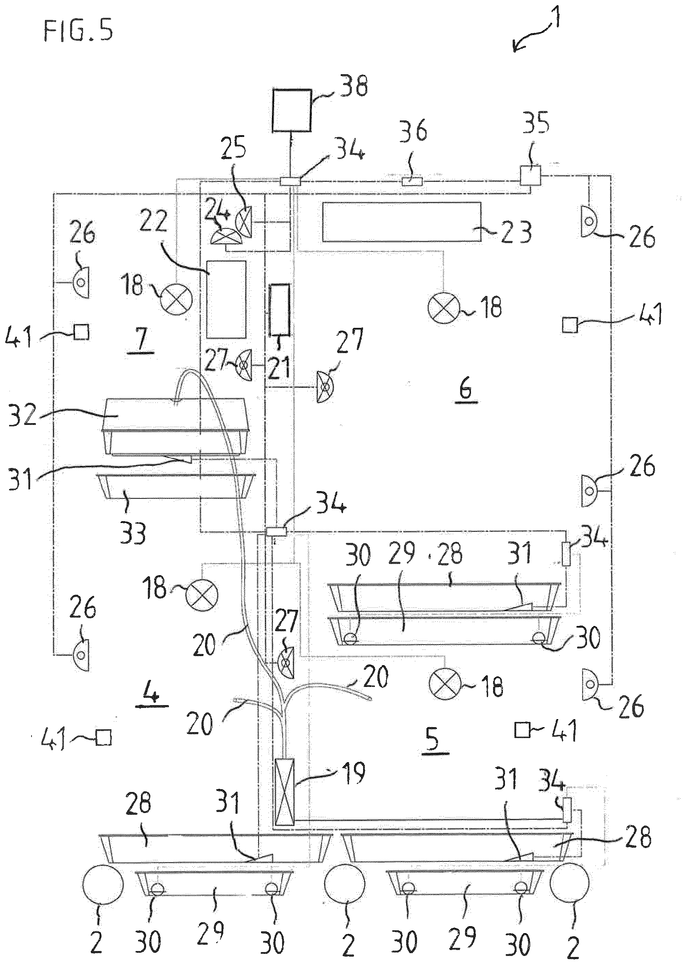

Innerhalb der Mutterpflanzenkammer 4, der Blühpflanzenkammer 6 und der Stecklingskammer 7 und vorzugsweise auch in der Jungpflanzenkammer 5 sind jeweils ein oder mehrere Zirkulationslüfter 27 vorgesehen, mittels dessen die in der jeweiligen Kammer befindliche Luft zum Zirkulieren gebracht werden kann. Auch diese Zirkulationslüfter werden individuell von der Steuereinheit 21 gesteuert. Die Zulufteinheiten 26 und die Zirkulationslüfter 27 werden jeweils mit einer Gleichspannung von 12 Volt versorgt, wie noch unten anhand der Figur 5 erläutert wird.

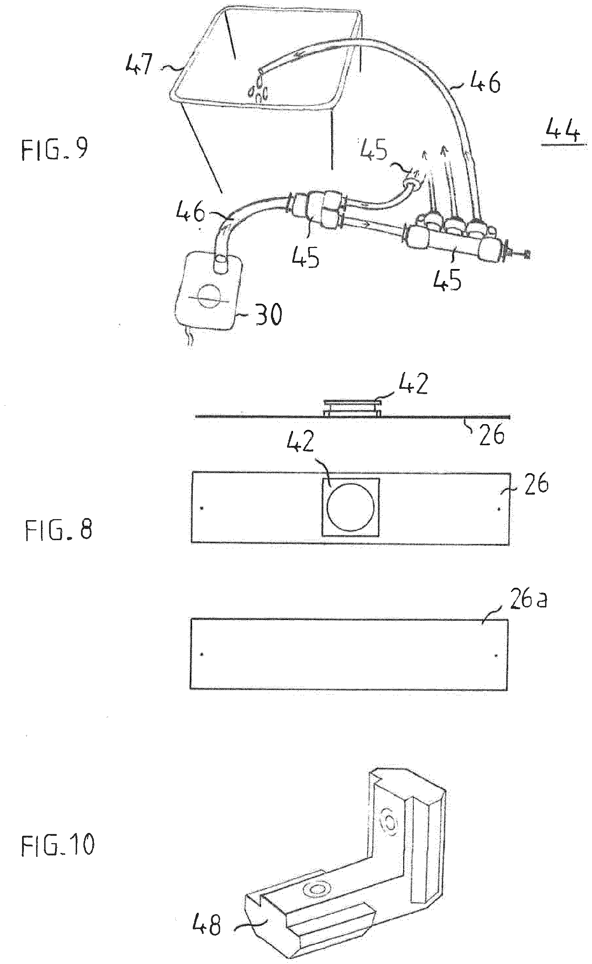

Ferner weist die in der Figur 4 gezeigte Aufzuchtanlage 1 in der Mutterpflanzenkammer 4, der Jungpflanzenkammer 5 und der Blühpflanzenkammer 6 jeweils eine Ablaufwanne 28 auf, in welcher in der jeweiligen Kammer gebildetes Wasser gesammelt wird und dann durch einen Auslass in einen unterhalb der jeweiligen Ablaufwanne 28 positionierten Nährflüssigkeitsbehälter 29, bei dem es sich vorzugsweise um eine Nährflüssigkeitswanne handelt, abgegeben wird. Dort wird das gesammelte Wasser zirkuliert und dabei mit einer im Nährflüssigkeitsbehälter 29 befindlichen Nährflüssigkeit vermischt und dann unter Verwendung von Pumpen 30 umgewälzt, bei denen es sich beispielsweise um herkömmliche Aquariumpumpen oder Teichpumpen handelt, in der jeweiligen Kammer wieder nach oben gepumpt und der in der jeweiligen Kammer befindlichen Pflanze zugeführt. Eine derartige Bewässerungseinheit ist in der Figur 9 veranschaulicht.

Zur Förderung des Pflanzenwachstums ist in der Mutterpflanzenkammer 4, der Jungpflanzenkammer 5, der Blühpflanzenkammer 6 und der Stecklingskammer 7 jeweils eine Heizmatte 31 vorgesehen. Diese Heizmatten 31 werden durch die Steuereinheit 21 individuell gesteuert.

Die Kammer 7 kann - wie oben beschrieben wurde - als Stecklingskammer verwendet werden, in welcher eine Stecklingswanne 32 angeordnet ist, oder alternativ dazu auch als Trocknungskammer, in welcher eine Trocknungswanne 33 vorgesehen ist.

Die Stromversorgung der in der Aufzuchtanlage angeordneten elektrischen Verbraucher verfolgt unter Verwendung von Steckerleisten 34, die von einer Energiequelle mit Energie versorgt werden und an welche die genannten elektrischen Verbraucher angeschlossen sind. Bei dem in der Figur 4 gezeigten Ausführungsbeispiel sind insgesamt vier Steckerleisten 32 vorgesehen.

Da sowohl die Mutterpflanzenkammer 4 als auch die Jungpflanzenkammer 5 als auch die Blühpflanzenkammer 6 als auch die Stecklingskammer 7 nach außen gerichtete abnehmbare Seitenplatten aufweisen, besteht in vorteilhafter Weise die Möglichkeit, eine oder mehrere dieser Seitenplatten der jeweiligen Kammer schnell und einfach abzunehmen, um Arbeiten in der jeweiligen Kammer zu verrichten. Sind diese Arbeiten beendet, dann können die jeweiligen Seitenplatten wieder zum Verschließen der jeweiligen Kammer an den jeweiligen Leichtmetallprofilen befestigt werden.

Ferner sind in der Figur 4 in den einzelnen Kammern Sensoren 41 dargestellt. Zu diesen Sensoren gehören beispielsweise Temperatursensoren, Feuchtigkeitssensoren, Helligkeitssensoren, usw. Deren Ausgangssignale werden der Steuereinheit 21 zugeführt, die diese Sensorsignale zur Ermittlung von Steuersignalen für die Aufzuchtanlage verwendet.

Die Figur 5 zeigt eine Skizze zur besseren Veranschaulichung der Stromversorgung der Aufzuchtanlage unter Verwendung von Steckerleisten. Zu dieser Stromversorgung ist eine Energiequelle 38 vorgesehen, bei der es sich beispielsweise um ein herkömmliches Wechselstromnetz handelt. Dieses Wechselstromnetz ist mit einer Steckerleiste 34 verbunden, welche an ihren Ausgängen jeweils eine 240 Volt Wechselspannung bereitstellt. Diese Steckerleiste 34 ist innerhalb der Aufzuchtanlage 1 mit den weiteren Steckerleisten 34 verbunden und stellt diesen die genannte 240 Volt Wechselspannung zur Verfügung. Von diesen Steckerleisten 34 aus werden alle Wechselstromverbraucher der Aufzuchtanlage mit der genannten Wechselspannung versorgt. Zu diesen Wechselstromverbrauchern gehören insbesondere die Abluftrohrventilatoren 24 und 25, die Heizmatten 31, der Luftbefeuchter 19, die Pumpen 30 und die Leuchtmittel 18.

An die auf der Oberseite der Aufzuchtanlage 1 positionierte Steckerleiste 34 ist des Weiteren ein Netzteil 36 angeschlossen, welches die ihm zugeführte 240 Volt Wechselspannung in eine 12 Volt Gleichspannung umsetzt. Diese 12 Volt Gleichspannung wird einer Lüftersteuerung 35 bereitgestellt, welche die genannte 12 Volt Gleichspannung an die Zulufteinheiten 26 der Aufzuchtanlage und die Zirkulationslüfter 27 der Aufzuchtanlage weiterleitet.

Die Figur 6 zeigt eine Blockdarstellung zur Veranschaulichung der Arbeitsweise der Steuereinheit 21 der Aufzuchtanlage.

Dieser Steuereinheit 21 werden von in der Aufzuchtanlage angeordneten Sensoren Messsignale m1, m2, ... mx zugeführt. Zu diesen Sensoren gehören beispielsweise in den einzelnen Kammern angeordnete Temperatursensoren, Feuchtigkeitssensoren, Helligkeitssensoren, usw. Die Steuereinheit 21 wertet die von diesen Sensoren bereitgestellten Messsignale unter Verwendung von in einem Speicher 21a hinterlegten Daten aus, wobei diese Daten einer Betriebssoftware entsprechen, bei der es sich um eine Pflanzenaufzuchtssoftware handelt, und stellt ausgangsseitig Steuersignale s1, s2, ..., sy bereit, die zur Steuerung der individuellen Beleuchtung der Kammern und/oder der individuellen Beheizung der Kammern und/oder der individuellen Belüftung der Kammern und/oder der individuellen Entlüftung der Kammern verwendet werden.

Vorzugsweise ist die Steuereinheit 21 derart ausgebildet, dass sie Steuersignale sowohl zur Steuerung der individuellen Beleuchtung der Kammern als auch Steuersignale zur individuellen Beheizung der Kammern als auch Steuersignale zur individuellen Belüftung der Kammern als auch Steuersignale zur individuellen Entlüftung der Kammern bereitstellt.

Alternativ dazu kann die Steuereinheit 21 auch derart ausgebildet sein, dass sie nicht zur Steuerung aller vorgenannter Komponenten ausgebildet ist. Beispielsweise kann von einer individuellen Beleuchtung der Kammern abgesehen werden, wenn die Seitenplatten der Kammern aus transparentem Glas bestehen. Des Weiteren kann von einer individuellen Beheizung der Kammern abgesehen werden, wenn die Pflanzenzuchtanlage keine Heizmatten 31 aufweist.

Die Steuereinheit 21 ist mit einer an der Aufzuchtanlage befestigten Bedieneinheit 39 verbunden. Über diese können beispielsweise Bedienbefehle zur Auswahl eines von mehreren im Speicher 21a hinterlegten Pflanzenaufzuchtsoftwareprogrammen ausgewählt werden. Beispielsweise sind im Speicher 21a mehrere Pflanzenaufzuchtsoftwareprogramme hinterlegt, von denen jedes zur Aufzucht einer anderen Pflanzensorte verwendet werden kann. Des Weiteren können über die Bedieneinheit 39 Bedienbefehle eingegeben werden, durch welche im Speicher 21a hinterlegte Daten geändert werden, beispielsweise Zeitdauern, für welche in einer bestimmten Kammer eine bestimmte Temperatur herrschen soll.

Des Weiteren ist die Steuereinheit 21 mit einem an der Aufzuchtanlage befestigten Display 40 verbunden. Auf diesem werden beispielsweise in den einzelnen Kammern momentan herrschende Temperaturen dargestellt.

Die Bedieneinheit 39 und das Display 40 können in einer gemeinsamen Kammer oder jeweils in einer eigenen Kammer der Aufzuchtanlage angeordnet sein, deren zum Benutzer gerichtete Vorderseite nicht durch eine Seitenplatte abgedeckt ist. Folglich kann eine Bedienung der Aufzuchtanlage ohne vorherige Abnahme einer Seitenplatte erfolgen. Des Weiteren können die am Display 40 angezeigten Daten ohne Zwischenanordnung einer Seitenplatte betrachtet werden. Eine vorteilhafte Ausgestaltung besteht darin, alternativ oder zusätzlich zur Bedieneinheit 39 eine Fernsteuervorrichtung 37 vorzusehen, die zu einer Fernsteuerung der Steuereinheit 21 und damit der Aufzuchtanlage 1 ausgebildet ist. Bei dieser Fernsteuervorrichtung, die vorzugsweise drahtlos mit der Steuereinheit 21 gekoppelt ist, handelt es sich vorzugsweise um einen Laptop oder ein Handy, das mit einer zugehörigen Applikationssoftware ausgestattet ist. Das Display dieser Fernsteuervorrichtung kann zur Anzeige von Daten aus der Aufzuchtanlage verwendet werden, beispielsweise zu einer Anzeige der in den einzelnen Kammern momentan herrschenden Temperaturen, etc.

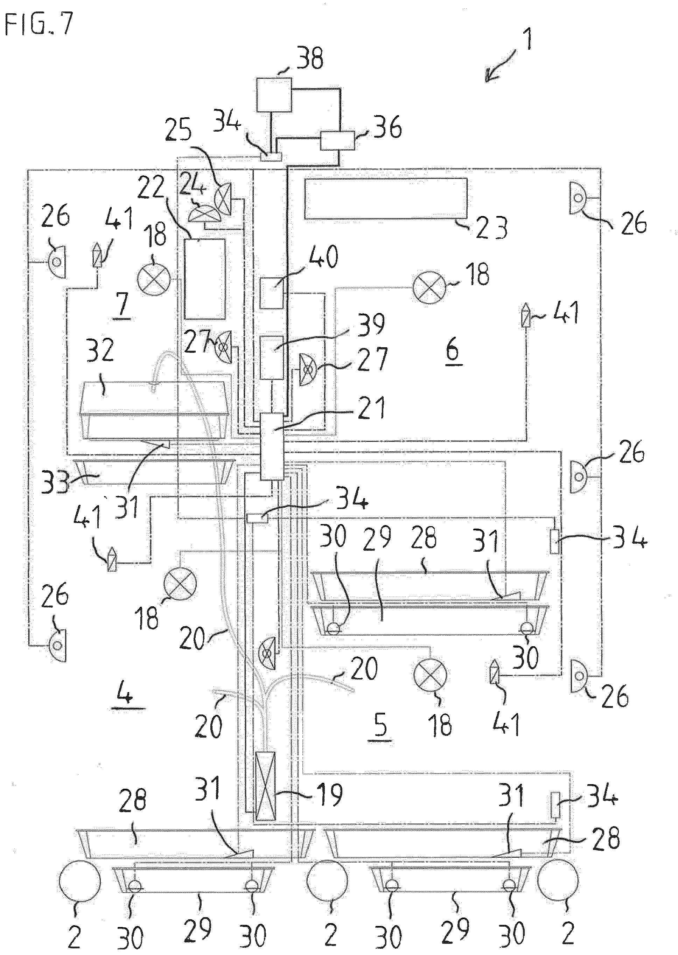

Die Figur 7 zeigt eine Skizze zur besseren Veranschaulichung der Stromversorgung der Aufzuchtanlage unter Verwendung der Steuereinheit. Zu dieser Stromversorgung ist eine Energiequelle 38 vorgesehen, bei der es sich beispielsweise um ein herkömmliches Wechselstromnetz handelt. Dieses Wechselstromnetz ist mit einem Netzteil 36 und einer Steckerleiste 34 verbunden. Die Steckerleiste 34 ist mit weiteren, innerhalb der Aufzuchtanlage angeordneten Steckerleisten 34 verbunden, welche an ihren Ausgängen jeweils eine 240 Volt Wechselspannung bereitstellen. An diese Steckerleisten können bei Bedarf Wechselstromverbraucher angeschlossen werden. Im Netzteil 36, welches auch von der Steckerleiste 34 energieversorgt werden kann, erfolgt eine Umwandlung der ihm zugeführten 240 Volt Wechselspannung in eine 12 Volt Gleichspannung. Diese 12 Volt Gleichspannung wird der Steuereinheit 21 zu deren Energieversorgung zugeführt. Die Energieversorgung aller weiterer Gleichstromverbraucher erfolgt bei diesem Ausführungsbeispiel über die Steuereinheit 21, wie es in der Figur 7 durch die von der Steuereinheit 21 ausgehenden Gleichstromversorgungsleitungen veranschaulicht ist. Im Unterschied zur Figur 5 handelt es sich bei dem in der Figur 7 veranschaulichten Ausführungsbeispiel bei den Leuchtmitteln 18, dem Luftbefeuchter 19, den Abluftrohrventilatoren 24 und 25 und den Heizmatten 31 um Gleichstromverbraucher.

Die Figur 8 zeigt eine Skizze zur Erläuterung eines Ausführungsbeispiels für eine Zulufteinheit 26. Diese Zulufteinheit weist einen PC-Lüfter 12 Volt auf, der mit der Bezugszahl 42 bezeichnet ist, und weist eine Abdeckung 26a auf. Diese Zulufteinheit ist eine unter Verwendung eines Gewindestabes und einer Rändelmutter-Schraubverbindung werkzeugfrei einzeln an dem Leichtmetallprofil/Gehäuse 10 aufsteckbar und auch einzeln werkzeugfrei von diesem Leichtmetallprofil/Gehäuse 10 abnehmbar. Die Abdeckung 26a ist dazu vorgesehen, einen Lichteintritt von außen nach innen zu vermeiden.

Die Figur 9 zeigt eine Skizze zur Erläuterung eines Ausführungsbeispiels für eine Bewässerungseinheit 44. Diese Bewässerungseinheit 44 ist dazu vorgesehen, unter Verwendung einer Pumpe 30 mit Nährflüssigkeit gemischtes Wasser aus einem der Nährflüssigkeitsbehälter 29 in derselben Kammer nach oben in einen in der Ablaufwanne 28 platzierten Pflanzentopf 47 zu befördern. Zu diesem Zwecke ist die Pumpe 30 über einen PVC-Wasserschlauch 46 mit einer Pneumatiksteckverbindung 45 gekoppelt, die ihrerseits mit mehreren weiteren Pneumatiksteckverbindungen 45 gekoppelt ist. Von diesen weiteren Pneumatiksteckverbindungen gehen weitere PVC-Wasserschläuche 46 aus, von denen in der Figur 9 einer in einen Pflanzentopf 47 geführt ist, um eine oder mehrere dort vorhandene Pflanzen zu bewässern. Das nach unten aus diesem Pflanzentopf austretende Wasser wird -wie es oben erläutert wurde- durch einen Auslass im Boden der Ablaufwanne 28, in welche der Pflanzentopf 47 eingesetzt ist, nach unten in den unter der Ablaufwanne 28 positionierten Nährflüssigkeitsbehälter abgeführt, dort wiederum mit Nährflüssigkeit gemischt und dann mittels der Pumpe 30 wiederum nach oben in den Pflanzentopf 47 gepumpt.

Die Figur 10 zeigt eine Skizze zur Veranschaulichung eines Ausführungsbeispiels für einen Steckverbindungsinnenwinkel, wie er beim Aufbau des Gehäuses der mobilen Aufzuchtanlage verwendet werden kann. Es ist ersichtlich, dass mittels dieses Steckverbindungsinnenwinkels ein horizontal verlaufendes Leichtmetallprofil mit einem vertikal verlaufenden Leichtmetallprofil zusammengesteckt werden kann und dass danach ein Verschrauben dieser Profile mit dem Steckverbindungsinnenwinkel erfolgen kann.

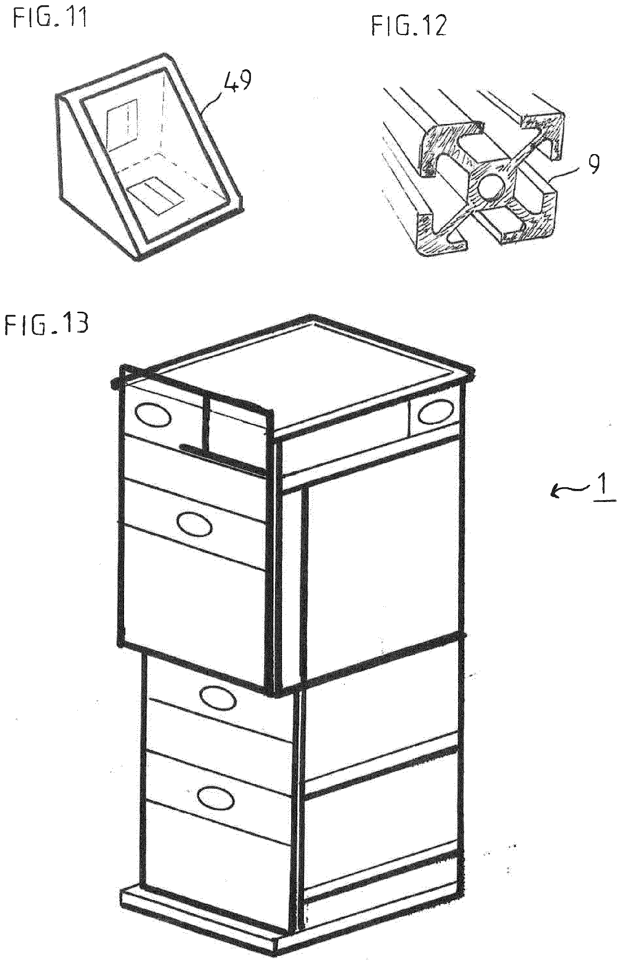

Die Figur 11 zeigt eine Skizze zur Veranschaulichung eines Ausführungsbeispiels für einen Schraubverbindungsnutwinkel 49. Dieser eignet sich insbesondere dazu, Bodeneinlagen in gewünschter Weise zu positionieren und kann als Halterung für Auflagen verwendet werden.

Die Figur 12 zeigt eine Skizze zur Veranschaulichung eines Ausführungsbeispiels für ein Leichtmetallprofil 9. Bei diesem Leichtmetallprofil handelt es sich vorzugsweise um ein Aluminiumprofil. Derartige Profile können -wie es in der Figur 1 veranschaulicht ist- zum Aufbau des Gerüsts 10 der mobilen Aufzuchtanlage verwendet werden. Des Weiteren können derartige Profile zu einer Erweiterung der mobilen Aufzuchtanlage verwendet werden, beispielsweise zu einer Erweiterung durch eine oder mehrere zusätzliche Kammern oder Module.

Die Figur 13 zeigt eine vereinfachte perspektivische Skizze einer Ausführungsform für eine mobile Aufzuchtanlage 1. Bei dieser Ausführungsform ist die mobile Aufzuchtanlage ähnlich einem Turm aufgebaut, der lediglich übereinander angeordnete Kammern aufweist.

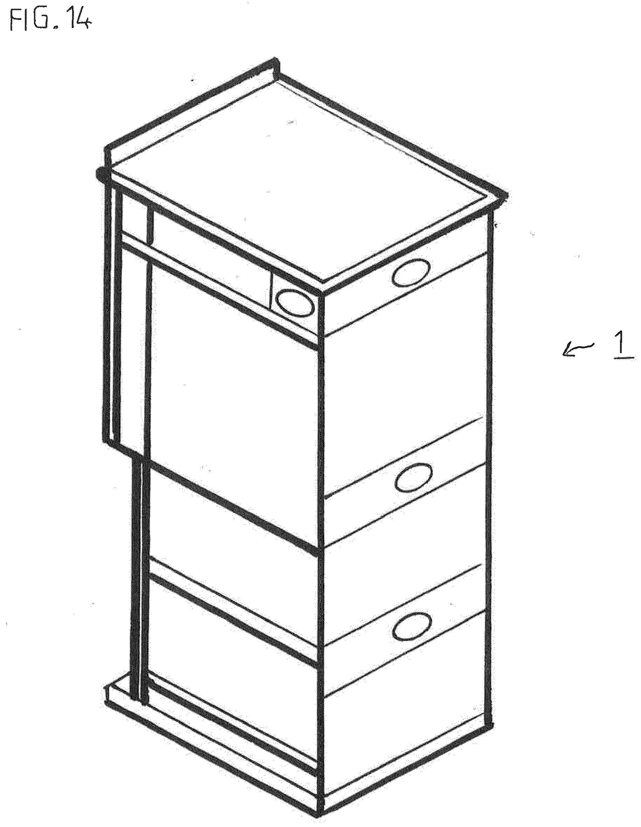

Die Figur 14 zeigt eine vereinfachte perspektivische Skizze einer weiteren Ausführungsform für eine mobile Aufzuchtanlage 1. Auch bei dieser Ausführungsform ist die mobile Aufzuchtanlage ähnlich einem Turm aufgebaut, der lediglich übereinander angeordnete Kammern aufweist.

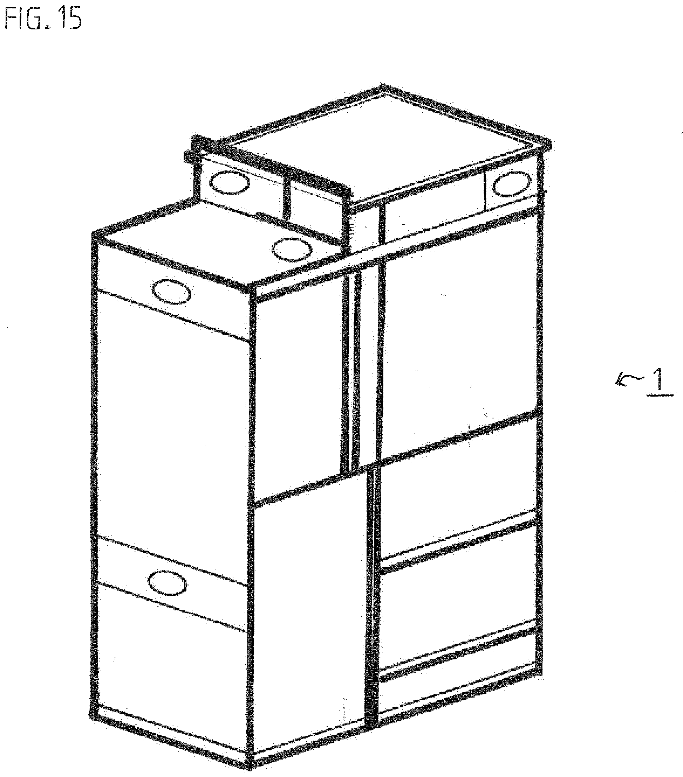

Die Figur 15 zeigt eine vereinfachte perspektivische Skizze einer weiteren Ausführungsform für eine mobile Aufzuchtanlage 1. Diese weist nebeneinander angeordnete Kammern und übereinander angeordnete Kammern auf.

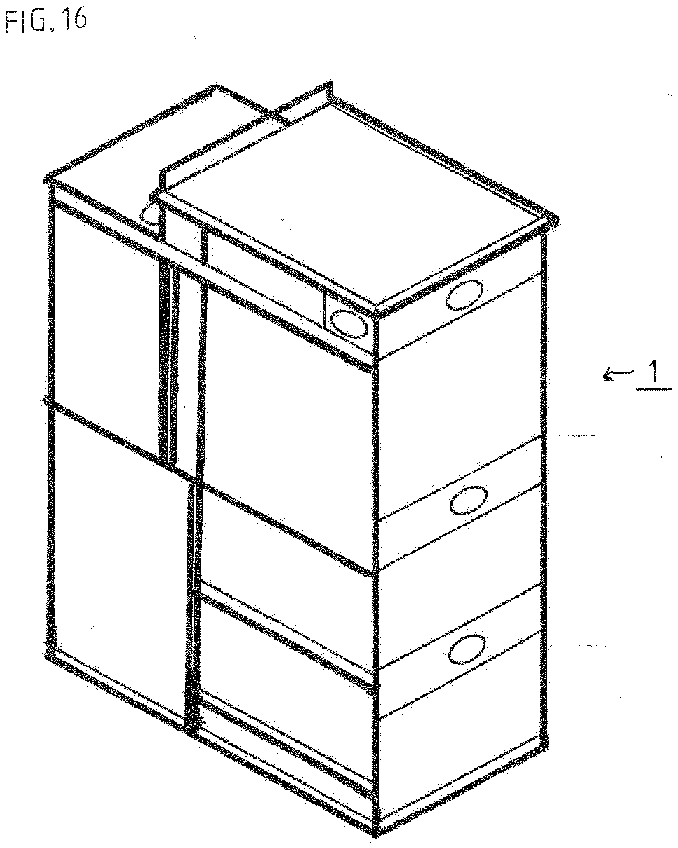

Die Figur 16 zeigt eine vereinfachte perspektivische Skizze einer weiteren Ausführungsform für eine mobile Aufzuchtanlage 1. Auch diese weist nebeneinander angeordnete Kammern und übereinander angeordnete Kammern auf.

Bei den in den Figuren 13, 14, 15 und 16 dargestellten Ausführungsformen wurde auf eine Darstellung der Räder der Aufzuchtanlage verzichtet.

Eine vorteilhafte Weiterbildung der Erfindung besteht darin, die Aufzuchtanlage mit Solarpanels auszustatten und die von diesen Solarpanels gesammelte Energie zusätzlich oder alternativ zum oben anhand der Figur 5 oder der Figur 7 beschriebenen Wechselspannungsnetz als Energiequelle 38 zur Energieversorgung der elektrischen Verbraucher der Aufzuchtanlage zu verwenden. Beispielsweise kann zur Energieversorgung der elektrischen Verbraucher der Aufzuchtanlage Solarstrom verwendet werden, solange ausreichend Solarstrom zur Verfügung steht. Ist dies nicht mehr der Fall, dann kann auf eine Energieversorgung aus dem Wechselstromnetz umgeschaltet werden.

Die Abmessungen der mobilen Aufzuchtanlage können beispielsweise wie folgt sein: Höhe: 2 m, Breite: 1,30 m, Tiefe: 0,75 m.

Alternativ dazu können die Abmessungen aber auch anders gewählt sein. Sie können größer oder kleiner gewählt werden, beispielsweise zum Zwecke einer Verwendung in einem großen Raum, beispielsweise einer Halle.

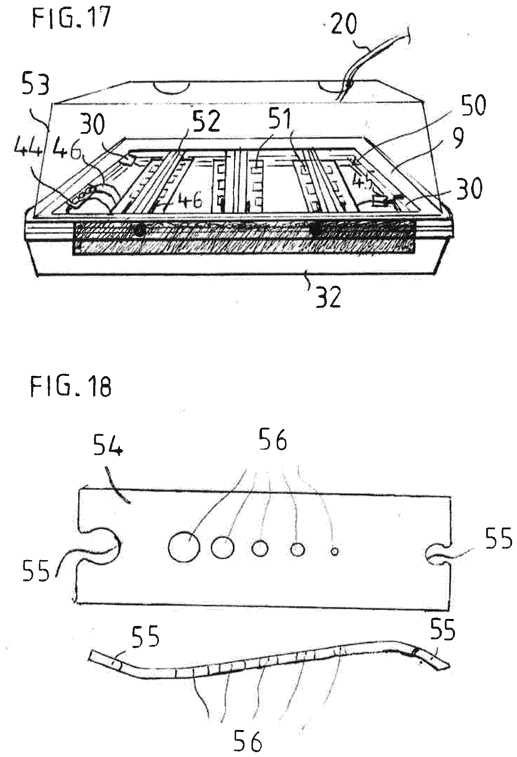

Die Figur 17 zeigt eine Skizze zur Veranschaulichung einer möglichen Ausgestaltung der in der Figur 4 gezeigten Stecklingswanne 32. Auf diese Stecklingswanne 32 ist ein Stecklingseinsatz 50 aufgesetzt. Des Weiteren sind in der Stecklingswanne 32 Pumpen 30, eine Bewässerungseinheit 44, eine Pneumatiksteckverbindung 45 und PVC-Wasserschläuche 46 angeordnet. Der Stecklingseinsatz weist einen Leichtmetallprofilrahmen 9 und am Leichtmetallprofilrahmen 9 befestigte Ablaufschienen 52 auf. Auf dem Stecklingseinsatz 50 ist ein Deckel 53 aufgesetzt, der die Stecklingswanne 32 und den darin angeordneten Stecklingseinsatz 50 abdeckt. Durch den Deckel 32 sind Befeuchtungsschläuche 20 geführt, die mit dem in der Figur 4 gezeigten Luftbefeuchter 19 verbunden sind. Die Ablaufschienen 52 sind in einem Gefälle angeordnet und bestehen aus Kunststoff oder Aluminium. Sie sind dafür vorgesehen, Nährflüssigkeit in den Ablaufschienen an Stecklingswürfel 51 zu verteilen.

Die Figur 18 zeigt Skizzen eines Erntehelfers 54, der ein Ernten der ausgereiften Pflanzen vereinfacht. Dieser Erntehelfer 54 weist mehrere Durchziehöffnungen 56 auf, die unterschiedliche Durchmesser haben. Des Weiteren sind in den schmalseitigen Endbereichen des Erntehelfers 54 Schabklingen 55 vorgesehen.

### Bezugszeichenliste:

- 1: Mobile Aufzuchtanlage
- 2: Rad
- 4: Kammer
- 5: Kammer
- 6: Kammer
- 7: Kammer
- 9: Leichtmetallprofil
- 10: Gehäuse
- 11: Seitenplatte
- 12: Seitenplatte
- 13: Seitenplatte
- 14: Seitenplatte
- 15: Klettverbindung
- 16: Flauschband
- 17: Hakenband
- 18: Leuchtmittel
- 19: Luftbefeuchter
- 20: Befeuchtungsschlauch
- 21: Steuereinheit
- 21a: Speicher
- 22: Aktivkohlefilter
- 23: Aktivkohlefilter
- 24: Abluftrohrventilator
- 25: Abluftrohrventilator
- 26: Zulufteinheit 12 V
- 26a: Abdeckung
- 27: Zirkulationslüfter 12 V
- 28: Ablaufwanne
- 29: Nährflüssigkeitsbehälter
- 30: Pumpe
- 31: Heizmatte
- 32: Stecklingswanne
- 33: Trocknungswanne
- 34: Steckerleiste
- 35: Lüftersteuerung 12 V
- 36: Netzteil
- 37: Fernsteuervorrichtung, Handy, Laptop
- 38: Energiequelle
- 39: Bedieneinheit
- 40: Display
- 41: Sensor(en)
- 42: PC-Lüfter 12 V
- 43: flexibles Abluftrohr
- 44: Bewässerungseinheit
- 45: Pneumatiksteckverbindung
- 46: PVC-Wasserschlauch
- 47: Pflanzentopf
- 48: Steckverbindungsinnenwinkel
- 49: Schraubverbindungsnutwinkel
- 50: Stecklingseinsatz
- 51: Stecklingswürfel
- 52: Ablaufschiene
- 53: Deckel
- 54: Erntehelfer
- 55: Schabklinge
- 56: Durchziehöffnung

## Patentansprüche

1. Mobile Aufzuchtanlage (1) für Pflanzen, aufweisend einen auf Rädern (2) gelagerten Behälter, welcher mehrere übereinander angeordnete Kammern (5,6; 4,7) und/oder mehrere nebeneinander angeordnete Kammern (4,5; 6,7) aufweist, wobei jede Kammer mehrere Seitenwände aufweist, wobei der Behälter ein aus Metall- oder Leichtmetallprofilen (9) zusammengesetztes Gehäuse (10) aufweist, innerhalb dessen die Kammern (4, 5, 6, 7) angeordnet sind, und wobei nach außen gerichtete Seitenwände der Kammern jeweils von einer oder mehreren abnehmbaren Seitenplatten (11, 12, 13) gebildet sind.

2. Mobile Aufzuchtanlage nach Anspruch 1, bei welcher die nicht nach außen gerichteten Seitenwände der Kammern jeweils von einer oder mehreren herausziehbaren Seitenplatten (14) gebildet sind.

3. Mobile Aufzuchtanlage nach Anspruch 1 oder 2, welche Seitenplatten aufweist, die aus Leichtmetall, Kunststoff, Plexiglas oder Glas bestehen.

4. Mobile Aufzuchtanlage nach einem der vorhergehenden Ansprüche, bei welcher die abnehmbaren Seitenplatten jeweils mit dem Gehäuse mittels Klettverbindungen (15) verbunden sind.

5. Mobile Aufzuchtanlage nach einem der vorhergehenden Ansprüche, welche eine oder mehrere Kammern aufweist, die jeweils eine oder mehrere transparente und/ oder nicht-transparente Seitenplatten aufweisen.

6. Mobile Aufzuchtanlage nach einem der vorhergehenden Ansprüche, welche eine Steuereinheit (21) aufweist, die zur Steuerung einer individuellen Beleuchtung und/oder individuellen Beheizung und/oder individuellen Belüftung und/oder individuellen Entlüftung der Kammern (4, 5, 6, 7) ausgebildet ist und einen Speicher (21a) aufweist, in welchem einer Betriebssoftware entsprechende Daten abgespeichert sind, die der Betriebssoftware einer Pflanzenaufzuchtanlage entsprechen.

7. Mobile Aufzuchtanlage nach Anspruch 6, bei welcher die Steuereinheit (21) mit einer Fernsteuereinheit (37) koppelbar ist und die Fernsteuereinheit (37) zur Eingabe von die Steuerung die Aufzuchtanlage (1) betreffenden Bedienbefehlen ausgebildet ist, wobei die Fernsteuereinheit (21) ein Handy oder ein Laptop ist und die Eingabe der Bedienbefehle unter Verwendung einer auf dem Handy oder dem Laptop gespeicherten Applikationssoftware erfolgt.

8. Mobile Aufzuchtanlage nach einem der vorhergehenden Ansprüche, welche durch einen Anbau einer oder mehrerer weiterer mobiler Aufzuchtanlagen oder weiterer Metall- oder Leichtmetallprofile oder weiterer Module erweiterbar ist.

9. Mobile Aufzuchtanlage nach einem der vorhergehenden Ansprüche, welche mittels Solarstrom betreibbar ist und Solarpanels aufweist.

10. Mobile Aufzuchtanlage nach einem der vorhergehenden Ansprüche, welche eine oder mehrere Steckerleisten (34) aufweist, die zum Anschluss interner elektrischer Verbraucher ausgebildet sind.

11. Mobile Aufzuchtanlage nach einem der vorhergehenden Ansprüche, welche zwei übereinander angeordnete Kammern (5, 6) aufweist, von denen die untere Kammer (5) eine Jungpflanzenkammer und die obere Kammer (6) eine Blühpflanzenkammer ist, und welche neben den beiden übereinander angeordneten Kammern zwei weitere übereinander angeordnete Kammern aufweisen (4, 7), von denen die untere Kammer(4) eine Mutterpflanzenkammer ist und die obere Kammer (7) eine Stecklingskammer oder Trocknungskammer ist.

12. Mobile Aufzuchtanlage nach einem der vorhergehenden Ansprüche, bei welcher in den Kammern Ablaufwannen (28) vorgesehen sind.

13. Mobile Aufzuchtanlage nach einem der vorhergehenden Ansprüche, bei welcher in den Kammern Nährflüssigkeitsbehälter (29) vorgesehen sind, bei welchen es sich vorzugsweise um Nährflüssigkeitswannen handelt, welche im laufenden Betrieb austauschbar sind.

14. Mobile Aufzuchtanlage nach Anspruch 13, bei welcher der Nährflüssigkeitsbehälter (29) einer Kammer unterhalb der Ablaufwanne (28) der Kammer angeordnet ist und die Ablaufwanne einen Auslass aufweist, durch welchen Flüssigkeit in den unter der Ablaufwanne angeordneten Nährflüssigkeitsbehälter ausgebbar ist, und bei welcher im Nährflüssigkeitsbehälter eine oder mehrere Pumpen (30) vorgesehen sind.

15. Mobile Aufzuchtanlage nach einem der vorhergehenden Ansprüche, welche Heizmatten (31) und/oder Zulufteinheiten (26) und/oder Zirkulationslüfter (27) und/ oder Aktivkohlefilter (22, 23) und/oder Leuchtmittel (18) und/oder Bewässerungseinheiten (44) und/oder Sensoren (41) und/oder Leichtmetallprofilsteckverbindungen (48) aufweist.
